# EUROPÄISCHE PATENTSCHRIFT

(11) **EP 2 817 587 B1**
(45) Veröffentlichungstag und Bekanntmachung des Hinweises auf die Patenterteilung: **19.12.2018**
(21) Anmeldenummer: 12706775.9
(22) Anmeldetag: 21.02.2012
(51) Int. Cl.: G06T 7/00, G01B 11/25, G01S 17/89, G06T 7/579

(54) **MESSVERFAHREN UND MESSVORRICHTUNG ZUR HERSTELLUNG EINES 3D-ORTAUFGELÖSTEN MESSERGEBNISSES IN EINEM NICHT-SICHTBAREN SPEKTRALBEREICH**
MEASURING METHOD AND MEASURING DEVICE FOR PRODUCING A 3D SPATIALLY RESOLVED MEASUREMENT RESULT IN A NONVISIBLE SPECTRAL RANGE
PROCÉDÉ ET DISPOSITIF DE MESURE POUR RÉALISER UN RÉSULTAT DE MESURE 3D RÉSOLU EN POSITION DANS UNE PLAGE SPECTRALE NON VISIBLE

(43) Veröffentlichungstag der Anmeldung: 31.12.2014
(73) Patentinhaber: Testo AG, 79853 Lenzkirch (DE)
(72) Erfinder: EVERS-SENNE, Jan-Friso, 79822 Titisee-Neustadt (DE); STRATMANN, Martin, 79117 Freiburg (DE); SCHMIEDER, Matthias, 79117 Freiburg (DE)
(74) Vertreter: Maucher Jenkins Patent- und Rechtsanwälte
(86) Internationale Anmeldenummer: PCT/EP2012/000751
(87) Internationale Veröffentlichungsnummer: WO 2013/123951

(56) Entgegenhaltungen:
- EP-A1- 1 857 978
- WO-A1-99/63485
- DE-A1-102009 030 644
- DE-A1-102010 005 265

## Beschreibung

Die Erfindung betrifft ein Messverfahren zur Erstellung eines ortsaufgelösten Messergebnisses in einem nicht-sichtbaren Spektralbereich, wobei in einem Bildaufnahmevorgang mit einer Aufnahmevorrichtung elektromagnetische Strahlung von einem Messobjekt in dem nicht-sichtbaren Spektralbereich ortsaufgelöst erfasst und gemessen wird und Pixel einer zweidimensionalen Pixelanordnung mit Messwerten zu der erfassten Strahlung befüllt werden.

Die Erfindung betrifft weiter eine Messvorrichtung mit einer Aufnahmevorrichtung mit einem Detektor zur ortsaufgelösten Erfassung elektromagnetischer Strahlung von einem Messobjekt in einem nicht-sichtbaren Spektralbereich, wobei der Detektor eine zweidimensionale Pixelanordnung von Pixeln definiert, welche mit Messwerten zu der erfassten Strahlung befüllbar ist.

Derartige Verfahren und Messvorrichtungen sind bekannt und liefern zweidimensionale Pixelanordnungen von Messwerten, indem die elektromagnetische Strahlung winkelabhängig zur Erstellung des ortsaufgelösten Messergebnisses erfasst wird.

Die Erfindung stellt sich die Aufgabe, die Möglichkeiten der Weiterverarbeitung derartigen Messergebnisse zu erweitern.

Aus DE 10 2009 030 644 A1 ist eine berührungslose Erfassungseinrichtung bekannt, bei welcher mit fest ausgerichteten und/oder entlang von fest vorgegebenen Verfahrwegen verfahrbaren Kameraeinrichtungen eine Oberfläche eines Objektes erfasst wird, um eine dreidimensionale Bildinformation der Oberfläche des Objekts zu bestimmen und die dreidimensionale Bildinformation mit dem thermographischen Bilddaten einer thermografischen Kameraeinrichtung zu verknüpfen.

Aus DE 10 2010 005265 ist bekannt, eine Mehrheit von Aufnahmevorrichtungen, die sogar im IR als auch im sichtbaren Spektralbereich arbeiten, in einer einzigen handgehaltenen Vorrichtung zu integrieren.

In der EP 1 857 978 A1 ist ein Verfahren und eine Vorrichtung zur Berechnung einer dreidimensionalen Information aus einer aus mehreren zeitlich nacheinander aufgenommenen Einzelbildern einer Videosequenz eines Messobjektes beschrieben. Zur Berechnung der dreidimensionalen Information wird auf ein Structure-from-motion-Verfahren zurückgegriffen. Aus WO 99/63485 ist ein Verfahren zur Erstellung einer dreidimensionalen Geometrie eines dreidimensionalen Objektes durch Verwendung eines mathematischen Algorithmus in Form eines Structure-from-motion-Verfahrens beschrieben. Hierbei ist ebenfalls vorgesehen, dass die zur Berechnung einer Bildtiefe verwendeten Einzelbilder durch eine einzige Kamera nacheinander aufgenommen werden.

Zur Lösung dieser Aufgabe sind bei einem Messverfahren der eingangs beschriebenen Art erfindungsgemäß die Merkmale von Anspruch 1 vorgesehen. Insbesondere wird somit erfindungsgemäß vorgeschlagen, dass eine Bildtiefenmessung durchgeführt wird, bei welcher zu jedem Pixel der Pixelanordnung jeweils eine Abstands- oder Positionsinformation gemessen oder berechnet wird, welche den Abstand oder die Position eines dem jeweiligen Pixel zugeordneten Oberflächenbereichs des Messobjekts in Bezug auf die Aufnahmevorrichtung zum Zeitpunkt des Bildaufnahmevorgangs repräsentiert. Mit der Abstands- oder Positionsinformation sind somit Angaben über eine dreidimensionale Oberflächenstruktur oder Oberflächengestalt des Messobjekts bereitstellbar. Mit diesen Angaben ist es somit möglich, die zweidimensionalen Pixelanordnungen für eine nachgelagerte Weiterverarbeitung oder Auswertung aufzubereiten, indem beispielsweise dreidimensionale, also räumliche, Messwertgradienten oder 3D-Messprofile berechenbar sind. Alternativ oder zusätzlich kann die Abstands- oder Positionsinformation zu einer Tiefenbestimmung in einer aufgenommenen Szene, welche das Messobjekt enthält, verwendet werden, um einen Autofokus der Aufnahmevorrichtung anzusteuern. Die Abstands- oder Positionsinformation kann auch dafür verwendet werden, dass räumliche Informationen über die Ausrichtung und Anordnung von Flächen an dem Messobjekt abgeleitet und verwendet werden, um Reflexions- und/oder Emissions-Charakteristiken der elektromagnetischen Strahlung berücksichtigen oder kompensieren zu können.

Mit der Abstands- oder Positionsinformation der Bildtiefenmessung ist es ferner möglich, eine Objekterkennung an den Messobjekt durchzuführen, um bestimmte Klassen von Messobjekten automatisch erkennbar zu machen. Denn die Abstands- oder Positionsinformation ermöglicht es, eine Merkmalserkennung für räumliche oder dreidimensionale Strukturen durchzuführen. Diese kann beispielweise durchgeführt werden, um charakteristische Profile oder Raumformen automatisiert erkennbar zu machen.

Ferner kann die Abstands- oder Positionsinformation dazu verwendet werden, dass mehrere Pixelanordnungen mit Messwerten, welche zu unterschiedlichen, sich überlappenden Raumwinkeln aufgenommen wurden, zu einem 3D-Panorama kombiniert werden, insbesondere durch Stitching.

Schließlich ist mit der Abstands- oder Positionsinformation aus der zweidimensionalen Pixelanordnung mit Messwerten ein 3D-Profil oder 3D-Modell erstellbar, welches mit den Messwerten oder daraus abgeleiteten Größen befüllt ist.

Die Abstands- oder Positionsinformation kann hierbei als pixelbezogene Distanzangabe zwischen dem Oberflächenbereich des Messobjekts, von dem der Messwert an dem jeweiligen Pixel erstellt wurde, zu einem fiktiven oder realen Punkt der Aufnahmevorrichtung vorliegen. Es kann aber auch vorgesehen kann, dass die Abstands- oder Positionsinformation als beispielweise drei- oder mehrdimensionale absolute Positionsangabe des erwähnten Oberflächenbereichs gemessen wird.

Bei Erfindung ist vorgesehen, dass bei der Bildtiefenmessung wenigstens zwei Bilder des Messobjekts aus unterschiedlichen Aufnahmepositionen aufgenommen werden. Somit ist eine Parallaxe oder scheinbare Positionsänderung des Messobjektes zwischen den Bildern, die aus den unterschiedlichen Aufnahmepositionen resultiert, bei einer geometrischen Berechnung der Abstands- oder Positionsinformation verwendbar. Hierzu können an sich bekannte geometrische Gesetzmäßigkeiten verwendet werden. Besonders günstig ist es, wenn die Bilder gleichzeitig aufgenommen werden. Von Vorteil ist dabei, dass sich das Messobjekt zwischen den beiden Bildern nicht verändern kann, sodass Mess- oder Berechnungsfehler bei der Messung oder Berechnung der Abstands- oder Positionsinformation vermeidbar sind. Es hat sich als günstig erwiesen, wenn bei der Bildtiefenmessung die wenigstens zwei Bilder des Messobjekts in einem sichtbaren Spektralbereich aufgenommen werden. Von Vorteil ist dabei, dass die Bilddaten bei einer Aufnahme im sichtbaren Spektralbereich besonders geeignet für die Berechnung von Abstands- oder Positionsinformation sind. Hierzu wird vorteilhaft wenigstens eine VIS-Kamera verwendet.

Bei einer Ausgestaltung der Erfindung kann vorgesehen sein, dass die Abstands- oder Positionsinformation aus einem Vergleich der aufgenommenen Bilder abgeleitet werden, insbesondere durch einen pixelweisen Vergleich. Dies kann beispielweise durch Ermittlung wenigstens einer scheinbaren Änderung von Positionen von Oberflächenbereichen des Messobjekts zwischen den Bildern durchgeführt werden. Von Vorteil ist dabei, dass die benötigte Abstands- oder Positionsinformation mit bekannten geometrischen Gesetzmäßigkeiten ableitbar ist. Hierzu können mit einer Kreuzkorrelation oder mit einer Merkmalsanalyse oder auf andere Weise die Bilder verglichen werden, um die scheinbare Änderung von Positionen von Oberflächenbereichen des Messobjekts zwischen den Bildern zu ermitteln. Aus dieser scheinbaren Änderung kann eine pixelbezogene Aufnahmerichtung für jedes Bild berechnet werden. Zu den berechneten Aufnahmerichtungen wird für zueinander inhaltlich korrespondierende Pixel jeweils ein Schnittpunkt der Aufnahmerichtungen berechnet. Aus diesen Schnittpunkten sind die benötigten Abstands- oder Positionsinformationen pixelweise berechenbar.

Bei einer Ausgestaltung der Erfindung kann vorgesehen sein, dass bei der Bildtiefenmessung eine Laufzeit eines Abtaststrahls gemessen wird. Von Vorteil ist dabei, dass eine Abstands- oder Positionsinformation in Form einer Distanzangabe zum Messobjekt direkt aus der Laufzeit berechenbar ist. Alternativ oder zusätzlich kann vorgesehen sein, dass bei der Bildtiefenmessung eine Phasenmodulation eines Abtaststrahls gemessen wird. Hierbei sind beispielweise Interferenzeffekte für die Messung der Abstands- oder Positionsinformation nutzbar. Zur Erstellung einer pixelbezogenen Abstands- oder Positionsinformation kann vorgesehen sein, dass der Abtaststrahl über das Messobjekt bewegt wird. Von Vorteil ist dabei, dass für die verschiedenen Oberflächenbereiche des Messobjekts individuelle Abstands- oder Positionsinformationen gewinnbar sind. Die Messung der Laufzeit kann beispielweise mit gepulsten Abtaststrahlen durchgeführt werden.

Bei einer Ausgestaltung der Erfindung kann vorgesehen sein, dass bei der Bildtiefenmessung eine Musterfolge auf das Messobjekt projiziert und die von dem Messobjekt reflektierte Musterfolge aufgenommen und ausgewertet wird. Durch die dreidimensionale Oberflächenstruktur oder Oberflächengestalt des Messobjektes werden die Muster der projizierten Musterfolge jeweils in der Aufnahme des Messobjekts gegenüber der ursprünglichen Mustergestalt verformt. Aus diesen Verformungen kann in an sich bekannter Weise die benötigte Abstand- oder Positionsinformation berechnet werden. Von Vorteil ist dabei, dass die Bildtiefenmessung für eine Vielzahl von Pixeln der Pixelanordnung in einem kurzen Zeitraum simultan durchführbar ist. Somit sind auch bewegte oder stark veränderliche Messobjekte gut verarbeitbar.

Bei einer Ausgestaltung der Erfindung kann vorgesehen sein, dass die Messwerte der Pixelanordnung automatisch in visuell wahrnehmbare Signale transformiert werden. Beispielweise können die Messwerte der Pixelanordnung in falschfarbenkodierte Signale transformiert werden. Vorzugsweise ist hierzu ein Farbkeil vorgesehen, mit welchem die Messwerte in Farbwerte umgesetzt werden. Von Vorteil ist dabei, dass das ortsaufgelöste Mess-ergebnis einfach visuell wahrnehmbar ist.

Bei einer Ausgestaltung der Erfindung kann vorgesehen sein, dass aus den gemessenen oder berechneten Abstands- oder Positionsinformationen automatisch eine digitale räumliche Darstellung des Messobjekts oder eines Teils davon erstellt wird. Von Vorteil ist dabei, dass eine automatische Berücksichtigung von Einflüssen, die aus der räumlichen Oberflächenstruktur oder Oberflächengestalt des Messobjekts herrühren, ermöglicht ist. Zusätzlich oder alternativ ist es somit möglich, ein 3D-Modell des Messobjekts zu erstellen, welches an seinen dreidimensionalen Pixelpunkten die zugehörigen Messwerte verzeichnet. Auf diese Weise kann das Messobjekt beispielweise mit seinen Messwerten auf bereitgehaltene CAD-Daten des Messobjekts abgebildet werden.

Bei der Erfindung ist vorgesehen, dass aus dem ortsaufgelösten Messergebnis und gemessenen oder berechneten Abstands- oder Positionsinformationen zwei bildliche Darstellungen des Messobjektes berechnet werden, durch welche das Messobjekt aus zueinander versetzt angeordneten Aufnahmepositionen wiedergegeben wird. Von Vorteil ist dabei, dass auf diese Weise eine stereoskopische Anzeige oder Darstellung des Messobjektes und der das Messobjekt enthaltenden Szene ermöglich ist. Die bildlichen Darstellungen können beispielweise getrennt voneinander generiert und angezeigt werden.

Bei einer Ausgestaltung der Erfindung kann vorgesehen sein, dass die bildlichen Darstellungen des Messobjekts an einer stereoskopischen Anzeigeneinheit angezeigt werden. Hierbei können die bildlichen Darstellungen gleichzeitig oder alternierend angezeigt werden. Die stereoskopische Anzeigeneinheit kann somit als autostereoskopisches Display mit einem entsprechenden Linsenraster oder entsprechenden Streifenmasken, als Display mit Shutter-Brillen-Technologie, als Display mit Polarisationfilter-Technologie, als Beamer mit Shutter und/oder Polarisationsfilter oder als 2D- oder 3D-PC-Display ausgebildet sein.

Um temperaturbezogene Messwerte zu erfassen, kann vorgesehen sein, dass als nicht-sichtbarer Spektralbereich ein infraroter Spektralbereich verwendet wird. Von Vorteil ist dabei, dass als Aufnahmevorrichtung eine Wärmebildkamera verwendbar ist.

Zur Lösung der genannten Aufgabe sind bei einer Messvorrichtung der eingangs beschriebenen Art erfindungsgemäß die Merkmale des unabhängigen, auf eine Messvorrichtung gerichteten Anspruchs vorgesehen. Von Vorteil ist dabei, dass ein zusätzlicher Datensatz in Form der Abstands- oder Positionsinformation bereitstellbar ist, mit welcher die Messwerte räumlich darstellbar oder verarbeitbar sind.

Bei der erfindungsgemäßen Messvorrichtung sind einfache Mittel ausgebildet, um die benötigte Abstands- oder Positionsinformation aus einer Parallaxe oder scheinbaren Bildverschiebung zwischen den wenigstens zwei Bildern zu berechnen. Um eine Veränderung des Messobjektes zwischen den Aufnahme zwei Bildern zu vermeiden, ist die Bildtiefenmesseinheit zur gleichzeitigen Aufnahme von wenigstens zwei Bildern des Messobjekts aus unterschiedlichen Aufnahmepositionen ausgebildet und ausgerichtet.

Es kann vorgesehen kann, dass die Bildtiefenmesseinheit wenigstens eine Kamera zur Aufnahme eines Bildes des Messobjekts aufweist. Besonders gute Ergebnisse bei der Berechnung der Abstands- oder Positionsinformation können erreicht werden, wenn die Bildtiefenmesseinheit zur Aufnahme in einem sichtbaren Spektralbereich ausgebildet und eingerichtet ist. Hierzu kann die Bildtiefenmesseinheit wenigstens eine VIS-Kamera aufweisen.

Bei einer Ausgestaltung der Erfindung kann vorgesehen sein, dass die Bildtiefenmesseinheit zum Vergleich der aufgenommenen Bilder und zur Ableitung der Abstands- oder Positionsinformation aus dem Vergleich ausgebildet und eingerichtet ist. Beispielweise kann vorgesehen sein, dass die Bildtiefenmesseinheit zur Ermittlung wenigstens einer scheinbaren Änderung von Positionen von Oberflächenbereichen des Messobjekts zwischen den Bildern ausgebildet und eingerichtet ist. Von Vorteil ist dabei, dass eine pixelbezogene Aufnahmerichtung für jedes der aufgenommenen Bilder berechenbar ist, aus welcher eine pixelbezogene Abstands- oder Positionsinformation ableitbar ist.

Besonders günstig ist es dabei, wenn in der Bildtiefenmesseinheit eine Korrespondenz zwischen Pixeln der aufgenommen Bilder und Pixeln der Pixelanordnung von Messwerten hinterlegt und zur Verwendung bereitgestellt ist. Von Vorteil ist dabei, dass eine für die Pixel der aufgenommenen Bilder berechnete Abstands- oder Positionsinformation einfach den Pixeln der Pixelanordnung zuordenbar ist.

Bei einer Ausgestaltung der Erfindung kann vorgesehen sein, dass die Bildtiefenmesseinheit zur Messung einer Laufzeit und/oder einen Phasenmodulation eines Abtaststrahls eingerichtet ist. Hierzu kann vorgesehen sein, dass der Abtaststrahl amplituden- und/oder phasenmodulierbar ist. Mit der Amplitudenmodulation sind beispielweise Pulse formbar, mit welchen eine Laufzeitmessung einfach durchführbar ist. Besonders günstig ist es, wenn der Abtaststrahl über das Messobjekt bewegbar eingerichtet ist. Von Vorteil ist dabei, dass eine winkelabhängige Laufzeit- und/oder Phasenmodulationsmessung durchführbar ist, aus welcher pixelbezogene Abstands- oder Positionsinformationen ableitbar sind. Die Bildtiefenmesseinheit kann in diesem Fall eine entsprechende Ansteuerungseinheit für den Abtaststrahl aufweisen.

Bei einer Ausgestaltung der Erfindung kann vorgesehen sein, dass die Bildtiefenmesseinheit zur Projektion einer Musterfolge auf das Messobjekt und zur Aufnahme und Auswertung der von dem Messobjekt reflektierten Musterfolge eingerichtet ist. Von Vorteil ist dabei, dass aus der Verzerrung der projizierten Muster der Musterfolge in den Aufnahmen auf die Oberflächenstruktur oder Oberflächengestalt des Messobjekts geschlossen werden kann. Die Bildtiefenmesseinheit weist in diesem Fall entsprechende Rechenmittel auf, welche eine Berechnung der Abstands- oder Positionsinformation aus dem verzerrten Muster der projizierten Musterfolge ermöglichen.

Bei einer Ausgestaltung der Erfindung kann vorgesehen sein, dass eine Datenverarbeitungseinheit ausgebildet ist, welche zur automatischen Transformation der Messwerte der Pixelanordnung in visuell wahrnehmbare Signale eingerichtet ist. Beispielweise kann vorgesehen sein, dass die Signale falschfarbenkodiert sind. Hierzu kann ein Farbkeil in der Messvorrichtung hinterlegt bereitgestellt sein, mit welchem die Messwerte in Farbwerte transformierbar sind.

Bei einer Ausgestaltung der Erfindung kann vorgesehen sein, dass die oder eine Datenverarbeitungseinheit zur automatischen Erstellung einer digitalen räumlichen Darstellung der Messobjekts oder eines Teils davon aus den gemessenen oder berechneten Abstands- oder Positionsinformationen eingerichtet ist. Von Vorteil ist dabei, dass auf diese Weise ein 3D-Modell des Messobjekts bildbar ist, welches zur Weiterverarbeitung bereitstellbar ist.

Die berechnete digitale räumliche Darstellung kann beispielwiese zu einer Anzeige des Messobjekts aus verschiedenen Betrachtungsrichtungen verwendet werden.

Bei der Erfindung ist vorgesehen, dass die oder eine Datenverarbeitungseinheit zur Berechnung von zwei bildlichen Darstellungen, durch welche das Messobjekt aus zueinander versetzt angeordneten Aufnahmepositionen wiedergegeben ist, aus dem ortsaufgelösten Messergebnis und den gemessenen oder berechneten Abstands- oder Positionsinformationen eingerichtet ist. Von Vorteil ist dabei, dass eine stereoskopische Anzeige oder Ausgabe möglich ist. Von Vorteil ist weiter, dass eine dreidimensionale Darstellung der Messwerte des Messergebnisses ermöglich ist. Beispielweise kann auf dieser Weise ein räumlicher Messwertgradient berechnet werden.

Bei einer Ausgestaltung der Erfindung kann vorgesehen sein, dass eine Anzeigeeinheit ausgebildet ist, welche zur stereoskopischen Anzeige der bildlichen Darstellungen des Messobjekts eingerichtet ist. Von Vorteil ist dabei, dass der Benutzer unmittelbar eine dreidimensionale bildliche Darstellung des Messobjekts betrachten kann. Die stereoskopische Anzeige kann hierbei zu einer gleichzeitigen Anzeige der bildlichen Darstellungen des Messobjekts oder zu einer alternierenden Anzeige der bildlichen Darstellung des Messobjekts eingerichtet sein.

Ein besonders bevorzugter Anwendungsfall der erfindungsgemäßen Messvorrichtung ist die Erfassung von temperaturbezogenen Messwerten mit der Aufnahmevorrichtung. Hierzu kann vorgesehen sein, dass als nicht-sichtbarer Spektralbereichen ein infraroter Spektralbereich verwendbar ist. Beispielweise kann in diesem Fall die Aufnahmevorrichtung als Wärmebildkamera ausgebildet sein.

Besonders günstig ist es, wenn die berechnete oder gemessene Anstands- oder Positionsinformation als zweidimensionales Datenfeld erstellbar ist und erstellt wird. Somit ist jedem Pixel der Pixelanordnung von Messwerten eine pixelbezogene Anstands- oder Positionsinformation zuordenbar.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination einzelner oder mehrerer Merkmale der Schutzansprüche untereinander und/oder mit einzelnen oder mehreren Merkmalen der Ausführungsbeispiele.

Es zeigt
- Fig. 1: eine erfindungsgemäße Messvorrichtung in einer dreidimensionalen Schrägansicht von vorn,
- Fig. 2: die Messvorrichtung gemäß Figur 1 in einer dreidimensionalen Schrägansicht von hinten,
- Fig. 3: eine stark vereinfachte Prinzipdarstellung einer Messsituation zur Erläuterung des erfindungsgemäßen Verfahrens,
- Fig. 4: eine stark vereinfachte Prinzipdarstellung der stereoskopischen Anzeige mit einer erfindungsgemäßen Messvorrichtung,
- Fig. 5: eine stark vereinfachte Prinzipdarstellung zur Erläuterung der Bildtiefenmessung mit einer erfindungsgemäßen Bildtiefenmesseinheit,
- Fig. 6: eine stark vereinfachte Prinzipdarstellung zur Erläuterung der Bildtiefenmessung mit einer weiteren Bildtiefenmesseinheit und
- Fig. 7: eine stark vereinfachte Prinzipdarstellung zur Erläuterung der Bildtiefenmessung mit einer dritten Bildtiefenmesseinheit.

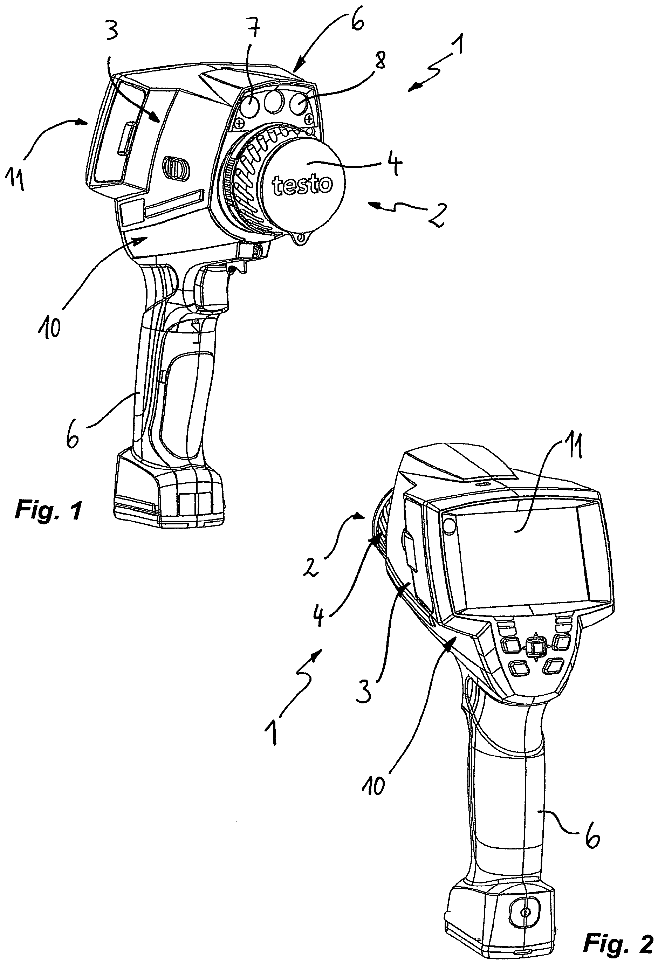

Eine in Figur 1 und Figur 2 dargestellte, in Ganzen mit 1 bezeichnete erfindungsgemäße Messvorrichtung hat eine Aufnahmevorrichtung 2, welche zur Erfassung elektromagnetischer Strahlung in einem nicht-sichtbaren Spektralbereich eingerichtet ist.

Zur Erläuterung des Erfindungsprinzips und als bevorzugtes Ausführungsbeispiel ist die Messvorrichtung 1 als Wärmebildkamera gezeigt, mit welcher Infrarot-Strahlung erfassbar ist, um ein Wärmebild als Pixelanordnung von temperaturbezogenen Messwerten, beispielsweise von Temperaturwerten, zu erstellen.

Die Aufnahmevorrichtung 2 weist hierzu in ihrem Inneren einen in an sich bekannter Weise ausgestalteten Detektor 3 auf, welcher für die erfasste elektromagnetische Strahlung im nicht-sichtbaren Spektralbereich empfindlich ist.

Der Detektor 3 ist hinter einer Aufnahmeoptik 4 angeordnet, welche für die zu erfassende nicht-sichtbare elektromagnetische Strahlung durchlässig ist.

Der Detektor 3 ist zur getrennten Erfassung der elektromagnetischen Strahlung aus unterschiedlichen Raumwinkelbereichen eingerichtet, beispielweise durch eine gitterförmige Anordnung von Detektorelementen.

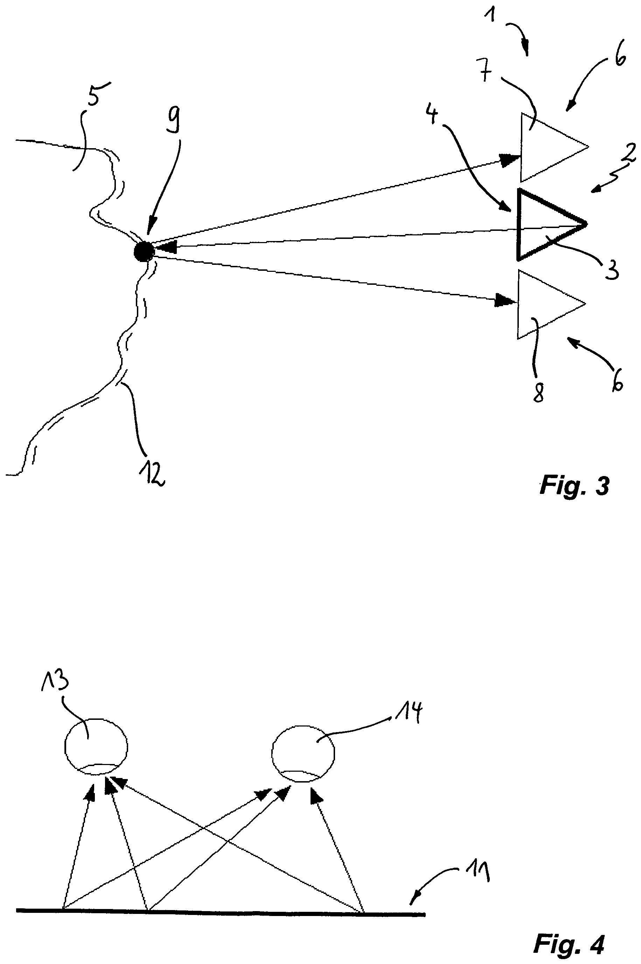

Somit kann mit der Aufnahmevorrichtung 2 in einem Bildaufnahmevorgang die durch die Aufnahmeoptik 4 einfallende elektromagnetische Strahlung von einem Messobjekt 5 (vergleiche Figur 3) winkelabhängig erfasst werden. Die einzelnen Messwerte für die jeweiligen Raumwinkel werden in eine Pixelanordnung geschrieben, sodass ein ortsaufgelöstes Messergebnis erstellt ist. Dieses Messergebnis gibt über die zweidimensionale, also flächige, Verteilung der Messwerte am Messobjekt 5 Auskunft.

Hierbei ist die Messvorrichtung 1 als handgehaltenes Messgerät mit einem Griff 6 ausgebildet.

Zur Erstellung des ortsaufgelösten Messergebnisses von dem Messobjekt 5 wird die Aufnahmeoptik 4 auf das Objekt 5 gerichtet.

Das aufgenommene Messergebnis liegt somit in der Pixelanordnung mit zweidimensionalen Ortsinformationen vor, welche eine flächige Verteilung der Messwerte und eine Zuordnung der Messwerte zu Raumwinkelbereichen erlaubt. Um den Informationsgehalt des Messergebnisses derart anzureichern, dass eine dreidimensionale Ortsangabe für die Messwerte der Pixelanordnung angebbar ist, verfügt die Messvorrichtung 1 über eine Bildtiefenmesseinheit 6.

Die Bildtiefenmesseinheit 6 weist in dem Ausführungsbeispiel gemäß Figur 1 bis Figur 3 eine rechte Kamera 7 und eine linke Kamera 8 auf.

Mit den Kameras 7, 8 sind somit im sichtbaren Bereich zwei Bilder des Messobjekts 5, ein rechtes Bild und ein linkes Bild, aufnehmbar und werden aufgenommen.

Diese beiden Aufnahmen erfolgen gleichzeitig, aber aus unterschiedlichen Aufnahmepositionen, die jeweils durch den Standort und die Ausrichtung der Kameras 7, 8 während der Aufnahme vorgegeben sind.

Durch diese unterschiedlichen Aufnahmepositionen ergeben sich unterschiedliche Bildpositionen des Messobjekts 5 in den Bildern, welche die rechte Kamera 7 einerseits und die linke Kamera 8 andererseits aufnehmen. Diese unterschiedlichen Bildpositionen entsprechen einer scheinbaren Bewegung oder einer Parallaxe des Messobjekts 5 zwischen den aufgenommenen Bildern.

Aus dieser scheinbaren Bewegung wird mit bekannten geometrischen Gesetzmäßigkeiten wenigstens eine Abstands- oder Positionsinformation für die einzelnen Pixel der mit den Kameras 7, 8 der Bildtiefenmesseinheit 6 aufgenommenen Bilder berechnet.

Da die Bildtiefenmesseinheit 6 an einer festen Relativpositionen bezüglich der Aufnahmevorrichtung 2 angeordnet ist, kann in der Messvorrichtung 1 eine Korrespondenz zwischen den Pixeln der mit der Bildtiefenmesseinheit 6 aufgenommenen Bilder und den Pixeln des mit der Aufnahmevorrichtung 2 erstellten Messergebnisses bereitgestellt und verwendet werden.

Diese Korrespondenz wird ausgenutzt, um den Pixeln des ortsaufgelösten Messergebnisses eine Abstands- oder Positionsinformation derart zuzuordnen, dass für jedes Pixel der Pixelanordnung der Abstand oder die Position eines diesem Pixel zugeordneten Oberflächenbereichs 9 des Messobjekts 5 angebbar ist.

Figur 3 zeigt die zugehörige Messsituation, in welcher mit dem Detektor 3 der Aufnahmevorrichtung 2 elektromagnetische Strahlung von diesen Oberflächenbereichen 9 erfasst wird. Durch Vergleich der mit den Kameras 7, 8 der Bildtiefenmesseinheit 6 aufgenommenen Bilder wird zusätzlich eine Abstands- oder Positionsinformation berechnet, welche den Abstand oder die Position des Oberflächenbereichs 9 in Bezug auf die Aufnahmevorrichtung 2 wiedergibt.

Im Inneren der Messvorrichtung 1 ist eine Datenverarbeitungseinheit 10 angeordnet, mit welcher das ortsaufgelöste Messergebnis pixelweise in visuell wahrnehmbare, falschfarbenkodierte Signale transformierbar ist.

Das transformierte Messergebnis wird anschließend an einer Anzeigeeinheit 11 angezeigt oder über einen nicht weiter dargestellten Datenanschluss ausgegeben.

Die Datenverarbeitungseinheit 11 ist durch entsprechende Programmierung so eingerichtet, dass eine digitale räumliche Darstellung 12 des Messobjekts 9 berechenbar ist. Hierzu greift die Datenverarbeitungseinheit 11 auf die zuvor ermittelte pixelbezogene Abstands- oder Positionsinformation zurück und stellt in einem Speicherbereich der Messvorrichtung 1 die automatisch erstellte digitale räumliche Darstellung 12 des Messobjekts 5 als 3D-Modell bereit.

Diese digitale räumliche Darstellung 12 ist in Figur 3 durch eine gestrichelte Linie angedeutet, obwohl sie virtuell in einem Speicherbereich vorgehalten wird.

Es ist ersichtlich, dass die digitale räumliche Darstellung 12 die dreidimensionale Oberflächenstruktur oder Oberflächengestalt des Messobjekts 5 gut nachgestaltet.

Die Datenverarbeitungseinheit 11 ist ferner durch entsprechende Programmierung so eingerichtet, dass aus der digitalen räumlichen Darstellung 12 oder den zugehörigen Daten zwei bildliche, also zweidimensionale, Darstellungen berechenbar sind und berechnet werden, wobei jedes der bildlichen Darstellungen das Messobjekt 5 aus zueinander versetzt angeordneten Aufnahmepositionen wiedergibt.

In Figur 4 ist dargestellt, dass diese zwei bildlichen Darstellungen an der Anzeigeeinheit so angezeigt werden, dass ein Benutzer mit seinem rechten Auge 13 nur diejenige bildliche Darstellung visuell wahrnimmt, welche zu einer virtuellen Aufnahmeposition einer rechten Kamera 7 in Figur 3 berechnet wurde, während der Benutzer mit seinem linken Auge 14 nur diejenige bildliche Darstellung visuell wahrnimmt, welche zu einer virtuellen Aufnahmeposition einer linken Kamera 8 in der Situation gemäß Figur 3 berechnet wurde.

Die Prinzipdarstellung in Figur 3 zeigt daher während des Messverfahrens einerseits die Position der Kameras 7, 8 zur Bildtiefenmessung und andererseits die relativ zueinander versetzt angeordneten virtuellen Aufnahmepositionen von virtuellen Kameras 7, 8, welche zu den erwähnten bildlichen Darstellung gehören.

Somit ergibt sich bei der Situation in Figur 4 für den Benutzer ein dreidimensionaler Eindruck des Messobjekts 5 in der erwähnten Falschfarbendarstellung der Messwerte.

Der Benutzer kann daher durch Betrachtung der Anzeigeeinheit die Messwerte in der Pixelanordnung des Messergebnisses mit einem zusätzlichen räumlichen Eindruck wahrnehmen.

Die Anzeigeeinheit ist somit zur stereoskopischer Anzeige der bildlichen Darstellungen des Messobjekts 5 eingerichtet. Hierbei kann mittels der Shutter- oder Polarisationsbrillen erreicht werden, dass die Augen 13, 14 nur jeweils die für sie bestimmte bildliche Darstellung visuell wahrnehmen können.

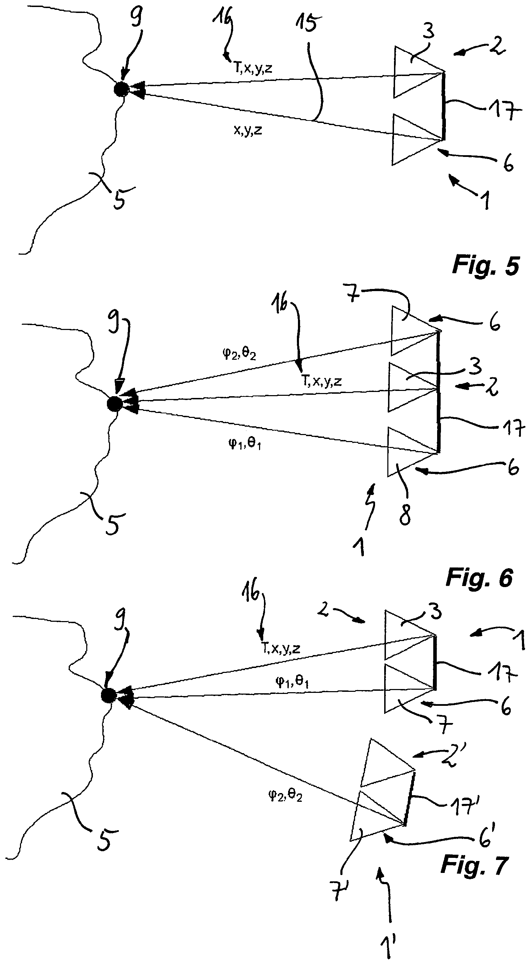

Es kann aber auch an der Anzeigeeinheit ein Linsenraster oder ein Streifenmaske ausgebildet sein, mit dem oder der die erwähnten bildlichen Darstellungen getrennt wahrnehmbar sind. In diesem Fall ist die Anzeigeeinheit somit als autostereoskopische Anzeigeeinheit ausgebildet. Beiden Ausführungsbeispiele gemäß Fig. 5 bis Fig. 7 sind funktionell oder konstruktiv zu Fig. 1 bis 4 gleichartige oder gleichwirkende Komponenten mit denselben Bezugszeichen bezeichnet und nicht erneut beschrieben.
Figur 5 zeigt ein weiteres erfindungsgemäßes Ausführungsbeispiel einer Messvorrichtung 1.
Bei dieser Messvorrichtung 1 hat die Bildtiefenmesseinheit 6 einen 3D-Sensor, mit welchem die Positionsinformation (x, y, z) ortsaufgelöst, also winkelabhängig, messbar ist. Dies kann beispielweise durch Projektion einer Musterfolge auf das Messobjekt 5 oder durch Laufzeitmessung oder Messung der Phasenmodulation eines Abtaststrahls 15 eingerichtet sein.
Mit dieser Abstands- oder Positionsinformation werden die Messwerte 16, im vorliegenden Fall ein Temperaturwert T, angereichert, so dass sich eine dreidimensionale Messwertverteilung ergibt.

Figur 6 zeigt die Verwendung zweier Kameras 7, 8 bei der Bildtiefenmessung bei einem weiteren erfindungsgemäßen Ausführungsbeispiel einer Messvorrichtung 1.

Die Kamera 7, 8 erfassen jeweils einen Raumwinkel (ϕ₁, θ₁) bzw. (ϕ₂, θ₂), unter denen der Oberflächenbereich 9 jeweils sichtbar ist.

Hierbei werden mit einer Merkmalsanalyse oder mit einer Korrelationsrechnung die zueinander zugehörigen Oberflächenbereiche 9 in den aufgenommen Bildern der Kameras 7, 8 identifiziert.

Aus den ermittelten Winkeln ist die Abstands- oder Positionsinformation (x, y, z) mit bekannten geometrischen Gleichungen berechenbar. Dies wird in der Datenverarbeitungseinheit 10 für alle Pixel der Pixelanordnung des ortsaufgelösten Messergebnisses durchgeführt, sodass sich eine räumliche Verteilung vom Messwerten 16, T ergibt.

Um die Abstands- oder Positionsinformation (x, y, z) aus den Winkeln (ϕ₁ , θ₁) und (ϕ₂, θ₂) zu berechnen, ist eine feste Ausrichtung der Kamera 7, 8 untereinander und zu dem Detektor 3 durch eine starre Kopplung 17 eingerichtet.

Aus dieser starren, mechanischen Kopplung 17 ergibt sich eine Korrespondenz von Pixeln der mit den Kameras 7, 8 aufgenommen Bilder zu den Pixeln der Pixelanordnung des ortaufgelösten Messergebnisses, welches mit der Aufnahmevorrichtung 2 erstellt wurde.

Figur 7 zeigt ein weiteres Ausführungsbeispiel einer erfindungsgemäßen Vorrichtung 1.

Bei diesem Ausführungsbeispiel weist die Bildtiefenmesseinheit 6 nur eine einzige Kamera 7 auf.

Im Unterscheid zu der Situation gemäß Figur 6, in welcher die Kameras 7, 8 gleichzeitig jeweils ein Bild aufnehmen, werden zur Bildtiefenmessung bei dem Ausführungsbeispiel gemäß Figur 7 zu zeitlich aufeinanderfolgenden Zeitpunkten wenigstens zwei Bilder mit der einzigen Kamera 7 nacheinander aufgenommen.

Da sich die Aufnahmeposition der Messvorrichtung 1 zwischen den Aufnahmen verändert, was in Figur 7 durch eingestrichene Bezugszeichen angedeutet ist, wird in den aufgenommenen Bildern das Messobjekt 5 jeweils aus unterschiedlichen Aufnahmepositionen aufgenommen.

Auf diese Weise erscheint beispielweise der Oberflächenbereich 9 in den Bildern unter unterschiedlichen Raumwinkeln (ϕ₁, θ₁) bzw. (ϕ₂, θ₂). Mit einem Structure from Motion-Algorithmus kann hieraus die benötigte Abstands- oder Positionsinformation (x, y, z) berechnet werden, welche dem Messwert T beigegeben wird.

Mit den Messvorrichtungen 1 gemäß Fig. 5, 6 und 7 wird nach Erstellung der Abstands- oder Positionsinformationen (x, y, z) eine stereoskopische Anzeige an einer Anzeigeeinheit 11 durchgeführt, wie dies schon zu Fig. 1-4 beschrieben wurde.

Bei den beschriebenen Ausführungsbeispielen wird mit den berechneten pixelabhängigen Abstands- oder Positionsinformationen (x, y, z) in der Datenverarbeitungseinheit 10 ein 3D-Modell des Messobjekts 5 berechnet, welches eine räumliche Verteilung der Messwerte 16, T der Aufnahmevorrichtung 2 entsprechend der Oberflächengestalt des Messobjekts 5 wiedergibt.

Bei der Messvorrichtung 1 mit einer Aufnahmevorrichtung 2 zur Erfassung eines ortsaufgelösten Messergebnisses in einem nicht-sichtbaren Spektralbereich wird vorgeschlagen, mit einer Bildtiefenmesseinheit 6 eine Bildtiefenmessung durchzuführen, welches dem Messwerten 16, T des ortsaufgelösten Messergebnisses jeweils eine Abstands- oder Positionsinformation (x, y, z) beiordnet, welche den Abstand oder die Position eines Oberflächenbereichs 9 eines Messobjekts 5, von welchem die elektromagnetische Strahlung zur Erstellung des Messwerts (16, T) erfasst wurde, in Bezug auf die Aufnahmevorrichtung 2 beschreibt.

## Patentansprüche

1. Messverfahren zur Erstellung eines ortsaufgelösten Messergebnisses in einem nicht-sichtbaren Spektralbereich, wobei in einem Bildaufnahmevorgang mit einer Aufnahmevorrichtung (2) elektromagnetische Strahlung von einem Messobjekt (5) in dem nicht-sichtbaren Spektralbereich ortsaufgelöst erfasst und gemessen wird und Pixel einer zweidimensionalen Pixelanordnung mit Messwerten (16, T) zu der erfassten Strahlung befüllt werden, wobei eine Bildtiefenmessung durchgeführt wird, bei welcher wenigstens zwei Bilder des Messobjekts (5) aus unterschiedlichen Aufnahmepositionen aufgenommen werden und zu jedem Pixel der Pixelanordnung jeweils eine Abstands- oder Positionsinformation (x, y, z) gemessen oder berechnet wird, welche den Abstand oder die Position eines dem jeweiligen Pixel zugeordneten Oberflächenbereichs (9) des Messobjekts (5) in Bezug auf die Aufnahmevorrichtung (2) zum Zeitpunkt des Bildaufnahmevorgangs repräsentiert, **dadurch gekennzeichnet, dass** die Abstands- oder Positionsinformation (x, y, z) aus einem Vergleich der aufgenommenen Bilder mit einem Structure-from-motion-Algorithmus berechnet werden, und dass aus dem ortsaufgelösten Messergebnis und den gemessenen oder berechneten Abstands- oder Positionsinformationen (x, y, z) zwei bildliche Darstellungen des Messobjektes (5) berechnet werden, durch welche das Messobjekt (5) aus zueinander versetzt angeordneten Aufnahmepositionen zu einer stereoskopischen Anzeige oder Darstellung wiedergegeben wird.

2. Messverfahren nach Anspruch 1, **dadurch gekennzeichnet, dass** bei der Bildtiefenmessung die wenigstens zwei Bilder des Messobjekts (5) aus unterschiedlichen Aufnahmepositionen gleichzeitig und/oder in einem sichtbaren Spektralbereich aufgenommen werden.

3. Messverfahren nach Anspruch 1 oder 2, **dadurch gekennzeichnet, dass** die Abstands- oder Positionsinformationen (x, y, z) aus einem Vergleich der aufgenommenen Bilder durch Ermittlung wenigstens einer scheinbaren Änderung von Positionen von Oberflächenbereichen (9) des Messobjekts (5) zwischen den Bildern abgeleitet werden.

4. Messverfahren nach einem der Ansprüche 1 bis 3, **dadurch gekennzeichnet, dass** bei der Bildtiefenmessung eine Laufzeit und/oder Phasenmodulation eines vorzugsweise über das Messobjekt (5) bewegbaren Abtaststrahls (15) gemessen wird.

5. Messverfahren nach einem der Ansprüche 1 bis 4, **dadurch gekennzeichnet, dass** bei der Bildtiefenmessung eine Musterfolge auf das Messobjekt (5) projiziert und die von dem Messobjekt (5) reflektierte Musterfolge aufgenommen und ausgewertet wird.

6. Messverfahren nach einem der Ansprüche 1 bis 5, **dadurch gekennzeichnet, dass** die Messwerte (16, T) der Pixelanordnung automatisch in visuell wahrnehmbare, insbesondere falschfarbenkodierte, Signale transformiert werden.

7. Messverfahren nach einem der Ansprüche 1 bis 6, **dadurch gekennzeichnet, dass** aus den gemessenen oder berechneten Abstands- oder Positionsinformationen (x, y, z) automatisch eine digitale räumliche Darstellung (12) des Messobjekts (5) oder eines Teils davon erstellt wird.

8. Messverfahren nach einem der Ansprüche 1 bis 7, **dadurch gekennzeichnet, dass** die bildlichen Darstellungen des Messobjekts (5), vorzugsweise gleichzeitig oder alternierend, an einer stereoskopischen Anzeigeeinheit angezeigt werden.

9. Handgehaltene Messvorrichtung (1) mit einer Aufnahmevorrichtung (2) mit einem Detektor (3) zur ortsaufgelösten Erfassung elektromagnetischer Strahlung von einem Messobjekt (5) in einem nicht-sichtbaren Spektralbereich, wobei der Detektor (3) eine zweidimensionale Pixelanordnung von Pixeln definiert, welche mit Messwerten (16, T) zu der erfassten Strahlung befüllbar ist, wobei die Messvorrichtung (1) eine Bildtiefenmesseinheit (6) und eine Datenverarbeitungseinheit (10) aufweist, wobei die Bildtiefenmesseinheit (6) zur Aufnahme von wenigstens zwei Bildern des Messobjekts (5) aus unterschiedlichen Aufnahmepositionen ausgebildet und eingerichtet ist und mit welcher für jedes Pixel der Pixelanordnung eine Abstands- oder Positionsinformation (x, y, z) messbar oder berechenbar ist, welche den Abstand oder die Position eines dem jeweiligen Pixel zugeordneten Oberflächenbereichs (9) des Messobjekts (5) in Bezug auf die Aufnahmevorrichtung (2) repräsentiert, **dadurch gekennzeichnet, dass** die Bildtiefenmesseinheit (6) zum Vergleich der aufgenommenen Bilder und zur Ableitung der Abstands- oder Positionsinformationen (x, y, z) aus dem Vergleich mit einem Structure-from-motion-Algorithmus ausgebildet und eingerichtet ist, und dass die Datenverarbeitungseinheit (10) zur Berechnung von zwei bildlichen Darstellungen, durch welche das Messobjekt (5) aus zueinander versetzt angeordneten Aufnahmepositionen zu einer stereoskopischen Anzeige oder Darstellung wiedergegeben ist, aus dem ortsaufgelösten Messergebnis und den gemessenen oder berechneten Abstands- oder Positionsinformationen (x, y, z) eingerichtet ist.

10. Messvorrichtung (1) nach Anspruch 9, **dadurch gekennzeichnet, dass** die Bildtiefenmesseinheit (6) zur Aufnahme von wenigstens zwei Bildern des Messobjekts (5) gleichzeitig und/oder in einem sichtbaren Spektralbereich aus unterschiedlichen Aufnahmepositionen ausgebildet und eingerichtet ist.

11. Messvorrichtung (1) nach Anspruch 9 oder 10, **dadurch gekennzeichnet, dass** die Bildtiefenmesseinheit (6) zum Vergleich der aufgenommenen Bilder durch Ermittlung wenigstens einer scheinbaren Änderung von Positionen von Oberflächenbereichen (9) des Messobjekts (5) zwischen den Bildern und zur Ableitung der Abstands- oder Positionsinformationen (x, y, z) aus dem Vergleich ausgebildet und eingerichtet ist.

12. Messvorrichtung (1) nach einem der Ansprüche 9 bis 11, **dadurch gekennzeichnet, dass** die Bildtiefenmesseinheit (6) zur Messung einer Laufzeit und/oder einer Phasenmodulation eines vorzugsweise über das Messobjekt (5) bewegbaren Abtaststrahls (15) eingerichtet ist.

13. Messvorrichtung nach einem der Ansprüche 9 bis 12, **dadurch gekennzeichnet, dass** die Bildtiefenmesseinheit (6) zur Projektion einer Musterfolge auf das Messobjekt (5) und zur Aufnahme und Auswertung der von dem Messobjekt (5) reflektierten Musterfolge eingerichtet ist.

14. Messvorrichtung (1) nach einem der Ansprüche 9 bis 13, **dadurch gekennzeichnet, dass** eine Datenverarbeitungseinheit (10) ausgebildet ist, welche zur automatischen Transformation der Messwerte (16, T) der Pixelanordnung in visuell wahrnehmbare, insbesondere falschfarbenkodierte, Signale eingerichtet ist.

15. Messvorrichtung (1) nach einem der Ansprüche 9 bis 14, **dadurch gekennzeichnet, dass** die oder eine Datenverarbeitungseinheit (10) zur automatischen Erstellung einer digitalen räumlichen Darstellung (12) des Messobjekts (5) oder eines Teils davon aus den gemessenen oder berechneten Abstands- oder Positionsinformationen (x, y, z) eingerichtet ist.

16. Messvorrichtung nach einem der Ansprüche 9 bis 15, **dadurch gekennzeichnet, dass** eine Anzeigeeinheit ausgebildet ist, welche zur stereoskopischen, vorzugsweise gleichzeitigen oder alternierenden, Anzeige der bildlichen Darstellungen des Messobjekts (5) eingerichtet ist.

## Claims

1. Measuring method for creating a spatially resolved measurement result in a nonvisible spectral range, wherein electromagnetic radiation from a measured object (5) is captured and measured in a spatially resolved manner in the nonvisible spectral range in an image recording process using a recording apparatus (2) and pixels of a two-dimensional pixel arrangement are filled with measurement values (16, T) relating to the captured radiation, wherein an image depth measurement is implemented, in which at least two images of the measured object (5) are recorded from different recording positions and a distance or position information item (x, y, z) is measured or calculated in each case for each pixel of the pixel arrangement, said distance or position information item representing the distance or the position of a surface region (9) of the measured object (5), assigned to the respective pixel, in relation to the recording apparatus (2) at the time of the image recording process, **characterized in that** the distance or position information item (x, y, z) is calculated from a comparison of the recorded images with a structure-from-motion algorithm, and **in that** two pictorial representations of the measured object (5) are calculated from the spatially resolved measurement result and the measured or calculated distance or position information items (x, y, z), by means of which two pictorial representations the measured object (5) is reproduced from recording positions, offset from one another, to form a stereoscopic display or representation.

2. Measuring method according to Claim 1, **characterized in that**, within the scope of the image depth measurement, the at least two images of the measured object (5) from different recording positions are recorded simultaneously and/or in a visible spectral range.

3. Measuring method according to Claim 1 or 2, **characterized in that** the distance or position information items (x, y, z) are derived from a comparison of the recorded images by establishing at least one apparent change in position of surface regions (9) of the measured object (5) between the images.

4. Measuring method according to any one of Claims 1 to 3, **characterized in that** a time of flight and/or phase modulation of a scanning beam (15) that is preferably movable over the measured object (5) is measured within the scope of the image depth measurement.

5. Measuring method according to any one of Claims 1 to 4, **characterized in that**, within the scope of the image depth measurement, a pattern sequence is projected onto the measured object (5) and the pattern sequence reflected by the measured object (5) is recorded and evaluated.

6. Measuring method according to any one of Claims 1 to 5, **characterized in that** the measurement values (16, T) of the pixel arrangement are automatically transformed into visually perceivable signals, in particular false-colour-encoded signals.

7. Measuring method according to any one of Claims 1 to 6, **characterized in that** a digital spatial representation (12) of the measured object (5) or of a part thereof is automatically created from the measured or calculated distance or position information items (x, y, z).

8. Measuring method according to any one of Claims 1 to 7, **characterized in that** the pictorial representations of the measured object (5) are displayed, preferably simultaneously or alternately, on a stereoscopic display unit.

9. Hand-held measuring apparatus (1) comprising a recording apparatus (2) with a detector (3) for a spatially-resolved capture of electromagnetic radiation from a measured object (5) in a nonvisible spectral range, wherein the detector (3) defines a two-dimensional pixel arrangement of pixels, which are fillable with measurement values (16, T) in relation to the captured radiation, wherein the measuring apparatus (1) has an image depth measuring unit (6) and a data processing unit (10), wherein the image depth measuring unit (6) is embodied and configured to record at least two images of the measured object (5) from different recording positions and by means of which a distance or position information item (x, y, z) is measurable or calculable for each pixel of the pixel arrangement, said position information item representing the distance or the position of a surface region (9) of the measured object (5), assigned to the respective pixel, in relation to the recording apparatus (2), **characterized in that** the image depth measuring unit (6) is embodied and configured to compare the recorded images and derive the distance or position information items (x, y, z) from the comparison with a structure-from-motion algorithm, and **in that** the data processing unit (10) is configured to calculate two pictorial representations, by means of which the measured object (5) is reproduced from recording positions, offset from one another, to form a stereoscopic display or representation, from the spatially resolved measurement result and the measured or calculated distance or position information items (x, y, z).

10. Measuring apparatus (1) according to Claim 9, **characterized in that** the image depth measuring unit (6) is embodied and configured to record at least two images of the measured object (5), simultaneously and/or in a visible spectral range, from different recording positions.

11. Measuring apparatus (1) according to Claim 9 or 10, **characterized in that** the image depth measuring unit (6) is embodied and configured to compare the recorded images by establishing at least one apparent change in position of surface regions (9) of the measured object (5) between the images and to derive the distance or position information items (x, y, z) from the comparison.

12. Measuring apparatus (1) according to any one of Claims 9 to 11, **characterized in that** the image depth measuring unit (6) is configured to measure a time of flight and/or phase modulation of a scanning beam (15), said the scanning beam preferably being movable over the measured object (5) .

13. Measuring apparatus according to any one of Claims 9 to 12, **characterized in that** the image depth measuring unit (6) is configured to project a pattern sequence onto the measured object (5) and to record and evaluate the pattern sequence reflected by the measured object (5).

14. Measuring apparatus (1) according to any one of Claims 9 to 13, **characterized in that** a data processing unit (10) is formed, the latter being configured to automatically transform the measurement values (16, T) of the pixel arrangement into visually perceivable signals, in particular false-colour-encoded signals.

15. Measuring apparatus (1) according to any one of Claims 9 to 14, **characterized in that** the, or a, data processing unit (10) is configured to automatically create a digital spatial representation (12) of the measured object (5) or of a part thereof from the measured or calculated distance or position information items (x, y, z).

16. Measuring apparatus according to any one of Claims 9 to 15, **characterized in that** a display unit is formed, the latter being configured to display the pictorial representations of the measured object (5) in stereoscopic fashion, preferably simultaneously or alternately.

## Revendications

1. Procédé de mesure pour réaliser un résultat de mesure résolu en position dans une plage spectrale non visible, dans lequel dans une opération de prise d'image avec un dispositif d'enregistrement (2) on détecte et on mesure de façon résolue en position un rayonnement électromagnétique d'un objet à mesurer (5) dans la plage spectrale non visible et on remplit des pixels d'un agencement de pixels bidimensionnel avec des valeurs de mesure (16, T) relatives au rayonnement détecté, dans lequel on effectue une mesure de profondeur d'image, dans laquelle on enregistre au moins deux images de l'objet à mesurer (5) à partir de positions d'enregistrement différentes et on mesure ou on calcule pour chaque pixel de l'agencement de pixels respectivement une information de distance ou de position (x, y, z), qui représente la distance ou la position d'une région (9) de la surface de l'objet à mesurer (5) associée au pixel respectif par rapport au dispositif d'enregistrement (2) à l'instant de l'opération de prise d'image,
**caractérisé en ce que** l'on calcule l'information de distance ou de position (x, y, z) à partir d'une comparaison des images enregistrées avec un algorithme de structure à partir du mouvement, et **en ce qu'**à partir du résultat de mesure résolu en position et des informations de distance ou de position mesurées ou calculées (x, y, z), on calcule deux représentations en image de l'objet à mesurer (5), par lesquelles on reproduit l'objet à mesurer (5) à partir de positions d'enregistrement disposées en décalage l'une par rapport à l'autre pour un affichage ou une représentation stéréo scopique.

2. Procédé de mesure selon la revendication 1, **caractérisé en ce que**, lors de la mesure de la profondeur d'image, on enregistre lesdites au moins deux images de l'objet à mesurer (5) à partir de positions d'enregistrement différentes simultanément et/ou dans une plage spectrale visible.

3. Procédé de mesure selon la revendication 1 ou 2, **caractérisé en ce que** l'on déduit les informations de distance ou de position (x, y, z) d'une comparaison des images enregistrées par détermination d'au moins un changement visible de positions de régions (9) de la surface de l'objet à mesurer (5) entre les images.

4. Procédé de mesure selon l'une quelconque des revendications 1 à 3, **caractérisé en ce que**, lors de la mesure de la profondeur d'image, on mesure une durée et/ou une modulation de phase d'un faisceau de balayage (15) déplaçable sur l'objet à mesurer (5).

5. Procédé de mesure selon l'une quelconque des revendications 1 à 4, **caractérisé en ce que**, lors de la mesure de la profondeur d'image, on projette une succession de motifs sur l'objet à mesurer (5) et on enregistre et on analyse la succession de motifs réfléchis par l'objet à mesurer (5).

6. Procédé de mesure selon l'une quelconque des revendications 1 à 5, **caractérisé en ce que** l'on transforme automatiquement les valeurs de mesure (16, T) de l'agencement de pixels en signaux visuellement perceptibles, en particulier codés en fausses couleurs.

7. Procédé de mesure selon l'une quelconque des revendications 1 à 6, **caractérisé en ce que** l'on crée automatiquement à partir des informations de distance ou de position mesurées ou calculées (x, y, z) une représentation spatiale numérique (12) de l'objet à mesurer (5) ou d'une partie de celui-là.

8. Procédé de mesure selon l'une quelconque des revendications 1 à 7, **caractérisé en ce que** l'on affiche les représentations en image de l'objet à mesurer (5), de préférence simultanément ou en alternance, sur une unité d'affichage stéréo scopique.

9. Dispositif de mesure manuel (1) avec un dispositif d'enregistrement (2) muni d'un détecteur (3) pour la détection résolue en position d'un rayonnement électromagnétique d'un objet à mesurer (5) dans une plage spectrale non visible, dans lequel le détecteur (3) définit un agencement de pixels bidimensionnel de pixels qui peuvent être remplis avec des valeurs de mesure (16, T) relatives au rayonnement détecté, dans lequel le dispositif de mesure (1) présente une unité de mesure de la profondeur d'image (6) et une unité de traitement de données (10), dans lequel l'unité de mesure de la profondeur d'image (6) est configurée et réalisée de façon à enregistrer au moins deux images de l'objet à mesurer (5) à partir de positions d'enregistrement différentes et avec laquelle une information de distance ou de position (x, y, z), qui représente la distance ou la position d'une région (9) de la surface de l'objet à mesurer (5) associée au pixel respectif par rapport au dispositif d'enregistrement (2), peut être mesurée ou calculée pour chaque pixel de l'agencement de pixels,
**caractérisé en ce que** l'unité de mesure de la profondeur d'image (6) est configurée et réalisée de façon à comparer des images enregistrées et à déduire les informations de distance ou de position (x, y, z) de la comparaison avec un algorithme de structure à partir du mouvement et **en ce que** l'unité de traitement de données (10) est réalisée de façon à calculer deux représentations en image, par lesquelles l'objet à mesurer (5) est reproduit à partir de positions d'enregistrement disposées en décalage l'une par rapport à l'autre en un affichage ou une représentation stéréoscopique, à partir du résultat de mesure résolu en position et des informations de distance ou de position mesurées ou calculées (x, y, z).

10. Dispositif de mesure (1) selon la revendication 9, **caractérisé en ce que** l'unité de mesure de la profondeur d'image (6) est configurée et réalisée de façon à enregistrer au moins deux images de l'objet à mesurer (5) simultanément et/ou dans une plage spectrale visible à partir de positions d'enregistrement différentes.

11. Dispositif de mesure (1) selon la revendication 9 ou 10, **caractérisé en ce que** l'unité de mesure de la profondeur d'image (6) est configurée et réalisée de façon à comparer les images enregistrées par détermination d'au moins un changement visible de positions de régions (9) de la surface de l'objet à mesurer (5) entre les images et à déduire de la comparaison les informations de distance ou de position (x, y, z).

12. Dispositif de mesure (1) selon l'une quelconque des revendications 9 à 11, **caractérisé en ce que** l'unité de mesure de la profondeur d'image (6) est réalisée de façon à mesurer une durée et/ou une modulation de phase d'un faisceau de balayage (15) de préférence déplaçable sur l'objet à mesurer (5).

13. Dispositif de mesure selon l'une quelconque des revendications 9 à 12, **caractérisé en ce que** l'unité de mesure de la profondeur d'image (6) est réalisée de façon à projeter une succession de motifs sur l'objet à mesurer (5) et à enregistrer et analyser la succession de motifs réfléchis par l'objet à mesurer (5).

14. Dispositif de mesure (1) selon l'une quelconque des revendications 9 à 13, **caractérisé en ce qu'**il est prévu une unité de traitement de données (10), qui est réalisée de façon à transformer automatiquement les valeurs de mesure (16, T) de l'agencement de pixels en signaux visuellement perceptibles, en particulier codés en fausses couleurs.

15. Dispositif de mesure (1) selon l'une quelconque des revendications 9 à 14, **caractérisé en ce que** la ou une unité de traitement de données (10) est réalisée de façon à créer automatiquement une représentation spatiale numérique (12) de l'objet à mesurer (5) ou d'une partie de celui-là à partir des informations de distance ou de position mesurées ou calculées (x, y, z).

16. Dispositif de mesure selon l'une quelconque des revendications 9 à 15, **caractérisé en ce qu'**il est prévu une unité d'affichage, qui est configurée en vue de l'affichage stéréoscopique, de préférence simultanément ou en alternance, des représentations en image de l'objet à mesurer (5).
